# EUROPEAN PATENT APPLICATION

(11) **EP 2 505 530 A2**
(43) Date of publication of application: **03.10.2012**
(21) Application number: 12162466.2
(22) Date of filing: 30.03.2012
(51) Int. Cl.: B65G 51/04, G07D 11/00

(54) **Money handling system and money handling method**

(30) Priority: 31.03.2011 JP 2011079905; 31.03.2011 JP 2011079944
(71) Applicant: Glory Ltd., Himeji, Hyogo 670-8567 (JP)
(72) Inventor: Tagashira, Kenichi, Hyogo, 670-8567 (JP); Higashiyama, Minoru, Hyogo, 670-8567 (JP); Nakagawa, Keiju, Hyogo, 670-8567 (JP)
(74) Representative: Schwabe - Sandmair - Marx

(57) **Abstract**

To provide a money handling system capable of improving operability and suppressing occurrence of trouble such as a jam. A money handling system 1 in an embodiment of the present invention includes: a POS register 12 having a display unit; a pneumatic tube 30 configured to transport a storing member 40 for the pneumatic tube; a status notifying unit 31 configured to notify a status of the pneumatic tube 30, and a control unit 11 configured to cause the display unit of the POS register 12 to display the status of the pneumatic tube 30 notified from the status notifying unit 31.

## Description

### FIELD OF THE INVENTION

The present invention relates to a money handling system and a money handling method, more particularly, to a money handling system in which a storing member is transported by a pneumatic tube, and a money handling method thereof.

### BACKGROUND ART

As one means for transporting money (banknotes, coins) between a store and a cash room in a supermarket and the like, a pneumatic tube (pneumatic carrier system) configured to transport a storing member (capsule) storing money is known. For example, Patent Document 1 discloses an air tube system for transporting cash, which has been handled by a cash desk of a supermarket, to a cash room.

Conventionally, destinations of banknotes received from customers are as follows. Namely, a small denomination banknote is deposited into a banknote change apparatus installed in a store, in order to use it as a change. On the other hand, in consideration that a large denomination banknote is less used as a change, and from the viewpoint of crime prevention, the large denomination banknote is stored in a storing member, and is collected in a cash room by a pneumatic tube.
Patent Document 1: EP0034940A

### SUMMARY OF THE INVENTION

However, in the conventional air tube system, since a status of the pneumatic tube is not managed, there is a problem in that the storing member, which is not yet full with money, is transported to the cash room, for example.

When a recognition apparatus including a storing mechanism is connected to the pneumatic tube so that money is automatically stored into the storing member, the following problems may occur. Namely, even when the recognition apparatus or the pneumatic tube has trouble such as a jam (banknote jam), a clerk does not notice the trouble and further put money thereinto. In addition, although the storing member is not set in the pneumatic tube, a clerk put money into the recognition apparatus to thereby invite a jam.

Thus, the object of the present invention is to provide a money handling system in which money is transported by using a pneumatic tube, which is capable of improving operability and suppressing occurrence of trouble such as a money jam, by managing a status of the pneumatic tube.

A money handling system in one embodiment of the present invention includes: a display unit; a pneumatic tube configured to transport a storing member; a status notifying unit configured to notify a status of the pneumatic tube; and a control unit configured to cause the display unit to display the status of the pneumatic tube notified from the status notifying unit.

According to such a money handling system, since the status of the pneumatic tube is displayed on the display unit, a clerk can easily grasp the state of the pneumatic tube, whereby operability and maintainability can be improved.

In the money handling system in this embodiment of the present invention, when the status of the pneumatic tube shows that the storing member is not set in the pneumatic tube, the control unit may be configured to cause the display unit to display a message for guiding to set the storing member in the pneumatic tube. Thus, it is not necessary for a clerk to visually check so as to confirm that the storing member is set in the pneumatic tube.

In the money handling system in this embodiment of the present invention, when the status of the pneumatic tube shows that the number of money stored in the storing member set in the pneumatic tube reaches the predetermined number, the control unit may be configured to cause the display unit to display a message for guiding to set another storing member in the pneumatic tube. Thus, after the storing member storing money of the predetermined number has been transported to a cash room by pressing down a transport button, a clerk can set another vacant storing member in the pneumatic tube. Namely, there can be suppressed a wrong operation by a clerk to transport the storing member, which does not yet store money of the predetermined number, to a cash room by pressing down the transport button.

The money handling system in this embodiment of the present invention may further include a storing unit configured to store money into the storing member set in the pneumatic tube; and a recognition apparatus including a recognition unit configured to recognize money put thereinto, the recognition apparatus being configured to put out the money that has been recognized by the recognition unit to the storing unit, and configured to notify a status of the recognition apparatus; wherein the control unit is configured to determine whether or not the recognition apparatus takes a money-input-standby state in which money can be put thereinto, based on the status of the recognition apparatus notified from the recognition apparatus. Thus, when the status of the recognition apparatus is abnormal, for example, the recognition apparatus is jammed with money, it is impossible to put money into the recognition apparatus, whereby secondary trouble can be prevented.

In addition, the money handling system in one of the present invention includes: a POS register; a pneumatic tube configured to transport a storing member; a status notifying unit configured to notify a status of the pneumatic tube; a recognition apparatus configured to recognize money to be stored in the storing member, and configured to notify a status of the recognition apparatus; a money change apparatus configured to recognize money put thereinto and store the recognized money, and configured to put out a change from the stored money; and a control unit configured to compare, for each denomination inputted to the POS register, an in-apparatus money-amount of each denomination in the money change apparatus, with a money-amount-to-be-kept of the corresponding denomination, the money-amount-to-be-kept being a storage limit of each denomination, the control unit further configured to cause the money change apparatus to take a money-input-standby state in which money of the corresponding denomination can be put thereinto, when the in-apparatus money-amount is smaller than the money-amount-to-be kept.

According to such a money handling system, when the in-apparatus money-amount of this denomination is smaller than the money-amount-to-be kept of this denomination, money of this denomination is deposited into the money change apparatus. Thus, the money-amount data of money of this denomination in the money change apparatus can be managed.

In the money handling apparatus in this embodiment of the present invention, when the in-apparatus money-amount is not less than the money-amount-to-be kept, the control unit may be configured to cause the recognition apparatus to take the money-input-standby state in which money of the corresponding denomination can be put thereinto, if the status of the pneumatic tube notified from the status notifying unit and the status of the recognition apparatus notified from the recognition apparatus are normal. Thus, when the in-apparatus money-amount of the denomination is not less than the money-amount-to-be kept of the denomination, money of the denomination can be safely put into the recognition apparatus.

In addition, a money handling method in one embodiment of the present invention includes: transmitting a money denomination inputted to a POS register to a control unit; comparing, for each denomination inputted to the POS register, an in-apparatus money-amount of each denomination in a money change apparatus, with a money-amount-to-be-kept of the corresponding denomination, the money-amount-to-be-kept being a storage limit of each denomination, and causing the money change apparatus to take a money-input-standby state in which money of the corresponding denomination can be put thereinto, when the in-apparatus money-amount is smaller than the money-amount-to-be kept, or causing a recognition apparatus to take the money-input-standby state in which money of the corresponding denomination can be put thereinto, when the in-apparatus money-amount is not less than the money-amount-to-be kept.

According to such a money handling method, when the in-apparatus money-amount of this denomination is smaller than the money-amount-to-be kept of this denomination, money of this denomination is deposited into the money change apparatus. On the other hand, when the in-apparatus money-amount is not less than the money-amount-to-be kept, money of this denomination is deposited into the recognition apparatus. Thus, the money-amount data of money of this denomination in the money change apparatus can be managed.

A money handling system in one embodiment of the present invention includes: a store in which money is reciprocated between a customer and a clerk; a cash room in which a safe is installed for collecting therein the money in the store; and a pneumatic tube configured to transport a storing member between the store and the cash room; the money handling system further including a first reader configured to read a storing-member identifier for identifying the storing member, from the storing member set in the pneumatic tube; a control unit configured to create storing-member information including the storing-member identifier, with the use of the storing-member identifier read by the first reader, and configured to transmit the storing-member information and a store identifier for identifying the store; and an in-store money-amount data management terminal configured to receive the store identifier and the storing-member information from the control unit, and configured to record storing-member information by store in which the storing-member information is related to the store identifier. According to such a money handling system, the storing member can be managed in relation to the store, and it is possible to grasp in which store the money in the storing member is put thereinto.

In addition, the money handling system in this embodiment of the present invention may further include a storing unit configured to store money into the storing member set in the pneumatic tube; and a recognition apparatus including a recognition unit configured to recognize money put thereinto, the recognition apparatus being configured to put out the money recognized by the recognition unit to the storing unit; wherein, when money is put into the recognition apparatus in a certain transaction, the control unit may renew the storing-member information with the use of money-amount by denomination of money stored by the storing unit into the storing member, and the in-store money-amount data management terminal may renew the storing-member information by store with the use of the renewed storing-member information transmitted from the control unit. Thus, the money-amount of the money in the storing member can be managed.

In addition, in the money handing system in this embodiment of the present invention, the storing-member information by store may include at least any of a time when a time when the storing member was set in the pneumatic tube or a time when the storing-member identifier of the storing member was read in the store, a time when money was stored into the storing member, a time when the storing member was transported to the safe, or a time when the storing-member identifier of the storing member was read in the cash room.

In addition, in the money handling system in this embodiment of the present invention, the storing-member information by store may include, as a status of the storing member, any of a first state that is a state before the storing member is set in the pneumatic tube, a second state that is a state where the storing member is set in the pneumatic tube, and a third state that is a state where the storing member has been transported to the safe by the pneumatic tube, and the control unit may renew the storing-member information when the status of the storing member changes, and the in-store money-amount data management terminal may renew the storing-member information by store with the use of the renewed storing-member information transmitted from the control unit. Thus, the status of the storing member can be managed by the in-store money-amount data management terminal.

In addition, in the money handling system in this embodiment of the present invention, when the control unit is notified from a status notifying unit, which is configured to notify a status of the pneumatic tube, that the storing member has been set in the pneumatic tube, the control unit may change the status of the storing-member information from the first state to the second state, and when the control unit is notified from the status notifying unit that the storing member set in the pneumatic tube has been transported to the safe by the pneumatic tube, the control unit may change the status of the storing-member information from the second state to the third state.

In addition, in the money handling system in this embodiment of the present invention, the storing-member information by store may include, as the status of the storing member, any of the first state that is a state before the storing member is set in the pneumatic tube, the second state that is a state where the storing member is set in the pneumatic tube, the third state that is a state where the storing member has been transported to the safe by the pneumatic tube, a fourth state where the storing member is in the course of being transported to an armoured car company, and a fifth state that is a state where the storing member has been transported to the armoured car company, and the control unit may renew the storing-member information when the status of the storing member changes, and the in-store money-amount data management terminal may renew the storing-member information by store with the use of the renewed storing-member information transmitted from the control unit. Thus, the status of the storing member can be managed in more detail.

In addition, in the money handling system in this embodiment of the present invention, when the control unit is notified from the status notifying unit that the storing member has been set in the pneumatic tube, the control unit may change the status of the storing-member information from the first state to the second state, when the control unit is notified from the status notifying unit that the storing member set in the pneumatic tube has been transported to the safe by the pneumatic tube, the control unit may change the status of the storing-member information from the second state to the third state, when the storing-member identifier of the storing member taken out from the safe is read in the cash room, the in-store money-amount data management terminal may change the status of the storing-member information by store from the third state to the fourth state, and when the storing-member identifier of the storing member transported to the armoured car company is read in the armoured car company, the in-store money-amount data management terminal may change the status of the storing-member information by store from the fourth state to the fifth state.

In addition, the money handling system in this embodiment of the present invention may further include a second reader connected to the in-store money-amount data management terminal, the second reader being configured to read the storing-member identifier.

In addition, the money handling system in this embodiment of the present invention may further include a CIT in-store money-amount data management terminal which is communicated, for communication, to the in-store money-amount data management terminal, wherein when the storing-member identifier of the storing member taken out from the safe is read by the second reader, the in-store money-amount data management terminal may transmit the storing-member information of the storing member to the CIT in-store money-amount data management terminal. Thus, the armoured car company can obtain information, such as money-amount data of the money in the storing member to be collected in the armoured car company, from the CIT in-store money-amount data management terminal.

In addition, the money handling system in this embodiment of the present invention may further include a third reader connected to the CIT in-store money-amount data management terminal, the third reader being configured to read the storing-member identifier.

In addition, in the money handling system in this embodiment of the present invention, the storing member may include a memory unit in which data can be written and from which data can be read, wherein the memory unit may record the store identifier and the storing-member information. Thus, even without the in-store money-amount data management terminal or the CIT in-store money-amount data management terminal, the storing-member information can be read by means of a reader of the memory unit.

In addition, in the money handling system in this embodiment of the present invention, the pneumatic tube may include a writing unit configured to write predetermined information in the memory unit of the storing member set in the pneumatic tube. Thus, information of money stored in the storing member and so on can be sequentially written in the memory unit.

In addition, in the money handling system in this embodiment of the present invention, the pneumatic tube may include a reading unit configured to read the storing-member identifier of the storing member set in the pneumatic tube, the pneumatic tube may transmit the storing-member identifier read by the reading unit, and, when the storing-member identifier read by the reading unit of the pneumatic tube corresponds to the storing-member identifier read by the first reader, the control unit may transmit the storing-member information to the in-store money-amount data management terminal. Thus, when the storing member, which is different from the storing member whose storing-member identifier has been read by the reading unit, is set in the pneumatic tube, it can be prevented that the management information and the actual information do not correspond to each other.

In addition, in the money handling system in this embodiment of the present invention, the first reader may be connected to the POS register installed in the store.

In addition, in the money handling system in this embodiment of the present invention, the POS resistor may transmit the storing-member identifier read by the first reader and an identifier of the POS resister as the store identifier, to the control unit.

In addition, in the money handling system in this embodiment of the present invention, the storing-member identifier may be recorded in a barcode or an IC tag of the storing member.

According to the money handling system of the present invention, operability can be improved as well as occurrence of trouble such as a jam can be suppressed.

### BRIEF DESCRIPTION OF THE DRAWINGS

Fig. 1 is a block diagram showing a structure of a money handling system in an embodiment of the present invention.
Fig. 2 is a structural showing a structure of a pneumatic tube including a storing unit and a structure of a recognition apparatus.
Figs. 3(a) to 3(c) are perspective views sequentially showing that a banknote is stored into a storing member by a storing mechanism.
Fig. 4 is a structural view showing a structure of the recognition apparatus including a storing mechanism.
Fig. 5 is a flowchart showing an operation of a clerk in the money handling system shown in Fig. 1.
Fig. 6A is a flowchart showing an operation of the money handling system shown in Fig. 1.
Fig. 6B is a flowchart showing an operation of the money handling system shown in Fig. 1.
Fig. 6C is a flowchart showing an operation of the money handling system shown in Fig. 1.
Fig. 7 is a view showing examples of a guide message.
Fig. 8 is a block diagram showing a structure of the money handling system in another embodiment of the present invention.
Fig. 9 is a flowchart showing an operation of the money handling system in the embodiment, when the storing member is set in the pneumatic tube.
Fig. 10 is a flowchart showing an operation of the money handling system in the embodiment, when money is put into the recognition apparatus.
Fig. 11(a) is a view showing a structural example of capsule information, and Fig. 11(b) is a view showing a structural example of capsuie-information-by-register.
Fig. 12 is a view for explaining a status transition of a capsule in the system shown in Fig. 8.
Fig. 13 is a view showing an example of an image screen showing money-amount data of every capsule, which is displayed on an in-store money-amount data management terminal.
Fig. 14 is a view showing an example of an image screen showing money-amount by denomination of a capsule, which is displayed on the in-store money-amount data management terminal.
Fig. 15 is a view showing an example of an invoice to be sent to an armoured car company, showing money-amount of every capsule.
Fig. 16 is a block diagram showing a structure of a money handling system including an in-store money-amount data management terminal, which is installed in an armoured car company.
Fig. 17 is a view for explaining a status transition of a capsule in the system shown in Fig. 14.

### DETAILED DESCRIPTION OF THE INVENTION

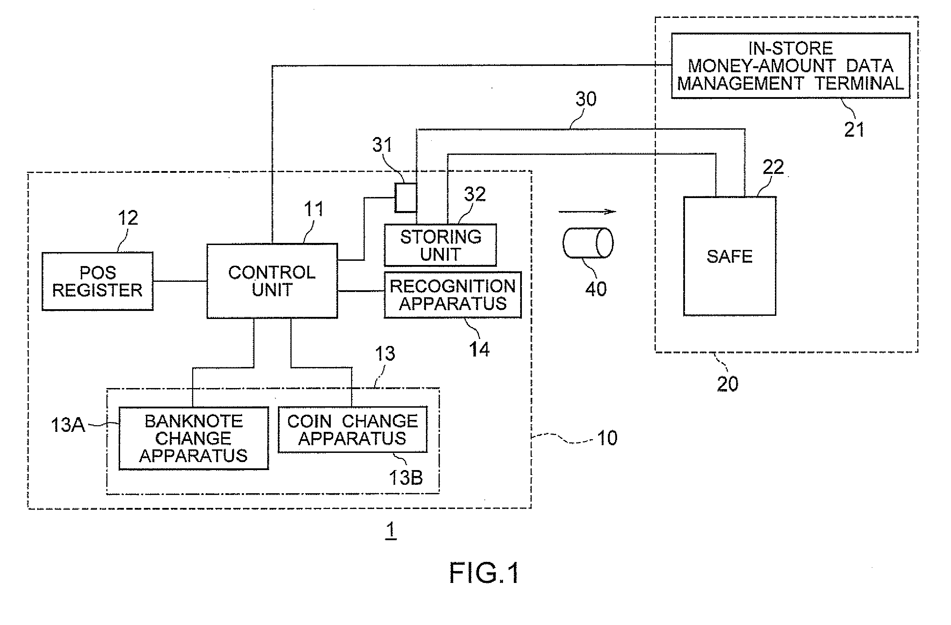

A structure of a money handling system in an embodiment of the present invention is described with reference to Fig. 1.

Fig. 1 is a block diagram showing the structure of the money handling system 1 in this embodiment. As shown in Fig. 1, the money handling system 1 includes: a store 10 where money (banknote, coin) is reciprocated between a clerk and a customer; a cash room 20 configured to manage and collect the money in the store 10; and a pneumatic tube 30 configured to transport a storing member 40 storing money from the store 10 to the cash room 20. In Fig. 1, although the only one store is illustrated, the money handling system 1 generally includes a plurality of stores 10.

Next, a structure of the store 10 is described. The store 10 includes a control unit 11, a POS (Point Of Sales) register 12, a money change apparatus 13, and a recognition apparatus 14. The money change apparatus 13 is composed of a banknote change apparatus 13A into which a banknote is deposited and from which a banknote is dispensed, and a coin change apparatus 13B into which a coin is deposited and from which a coin is dispensed.

As shown in Fig. 1, the control unit 11 is connected, for communication, to the POS register 12 and the money change apparatus 13, and causes a display unit of the POS register 12 to display a predetermined message. Further, the control unit 11 manages money-amount data of the money in the money change apparatus 13, and controls the money change apparatus 13.

In addition, the control unit 11 is connected, for communication, to the recognition apparatus 14 and a status notifying unit 31 of the pneumatic tube 30, which will be described in detail below. Thus, the control unit 11 can monitor and control the recognition apparatus 14, and can monitor the pneumatic tube 30.

In addition, as shown in Fig. 1, the control unit 11 is connected, for communication, to an in-store money-amount data management terminal 21 installed in the cash room 20, so that the control unit 11 can notify the in-store money-amount data management terminal 21 of various information, such as money-amount data of the money in the money change apparatus 13 and money-amount data of the money in the storing member 40 set in the pneumatic tube 30.

The POS register 12 includes the display unit that displays below-described various messages and deposit and dispense information (denomination, number and so on), and an input unit through which a clerk inputs an amount of money received from a customer.

The money change apparatus 13 performs a cash settlement operation between a clerk and a customer. In the cash settlement operation, the money change apparatus 13 performs a deposit process in which a cash paid by a customer is stored into the apparatus, and a dispense process in which a change to be paid to the customer is dispensed.

In addition, in order to collect the money in the apparatus into a safe 22 of the cash room 20, the money change apparatus 13 performs a collecting operation in which the money in the apparatus is dispensed.

The money change apparatus 13 includes a plurality of change storing and feeding units that can store money put thereinto and feed the stored money. Each of the change storing and feeding unit is configured to store money of a denomination assigned thereto. A storage limit is determined for each denomination. The storage limit is referred to as the money-amount-to-be-kept. The money-amount-to-be-kept is not limited to a maximum value of money capable of being stored in the change storing and feeding units. For example, in a case of a large denomination banknote, a relatively lower value is set as the money-amount-to-be kept, in order to make smaller money-amount in the store.

The recognition apparatus 14 includes a recognition unit 145 configured to recognize money put thereinto. The recognition apparatus 14 is configured such that the money that has been recognized by the recognition unit 145 is sent to a storing unit 32 of the pneumatic tube 30.

The recognition apparatus 14 performs different operations, depending on whether it is in a money-input-standby state or not. The money-input-standby state is a state where money can be put thereinto. Unless in the money-input-standby state, money cannot be put thereinto through an inlet, or money put thereinto is rejected and put outside the apparatus. The control unit 11 sets the money-input-standby state or not. Namely, based on the status of the recognition apparatus 14 notified from the recognition apparatus 14, the control unit 11 determines whether the recognition apparatus 14 takes the money-input-standby state in which money can be put thereinto or not.

Further, the recognition apparatus 14 is connected, for communication, to the control unit 11, so as to notify the control unit 11 of a status (occurrence of jam and the like) of the recognition apparatus 14 and information of recognized money (denomination, number and so on).

Next, the structure of the cash room 20 is described. As shown in Fig. 1, the cash room 20 includes the in-store money-amount data management terminal 21 configured to manage money-amount data of the money in the store 10, and the safe 22 configured to store the storing member 40 transported from the store 10 by the pneumatic tube 30.

The in-store money-amount data management terminal 21 is connected, for communication, to the control unit 11 installed in the store 10, through a communication line such as LAN (Local Area Network). The in-store money-amount data management terminal. 21 manages money-amount data of money stored in the money change apparatus 13 installed in the store 10, and also manages money-amount data of money stored in the storing member 40.

Next, the pneumatic tube 30 that transports the storing member 40 from the store 10 to the cash room 20 is described.

The pneumatic tube 30 includes an air tube connected to the recognition apparatus 14 of the store 10 and the safe 22 of the cash room 20. The pneumatic tube 30 is configured such that the storing member (capsule) 40 storing money is transported from the store 10 to the cash room 20 by a pneumatic pressure in the air tube. The storing member 40 is set by a clerk on an end of the air tube, such that the storing member 20 is oriented in a predetermined direction. The pneumatic tube 30 is provided with a senor (not shown) that detects the fact that the storing member 40 is set on a predetermined position. Due to this sensor, the below-described status notifying unit 31 can know whether the storing member 40 is set in the pneumatic tube 30 or not.

When a clerk presses down a transport button (not shown) provided on the pneumatic tube 30, the storing member 40 set in the pneumatic tube 30 is transported toward to cash room 20 so as to be stored in the safe 22.

The pneumatic tube 30 can be configured such that, after money of the predetermined number has been stored in the storing member 40, the storing member 40 is transported toward the cash room 20. Owing thereto, the storing member 40 storing money of the predetermined number can be automatically transported to the cash room 20.

In addition, the pneumatic tube 30 can be configured such that the number of money stored in the storing member 40 is notified by the below-described status notifying unit 31 to the the in-store money-amount data management terminal 21 through the control unit 11, and that the storing member 40 is transported based on a command from the in-store money-amount data management terminal 21. Thus, an operator of the in-store money-amount data management terminal 21 can monitor money-amount data of the storing member 40, and can transport the storing member 40 based on the money-amount of the storing member 40.

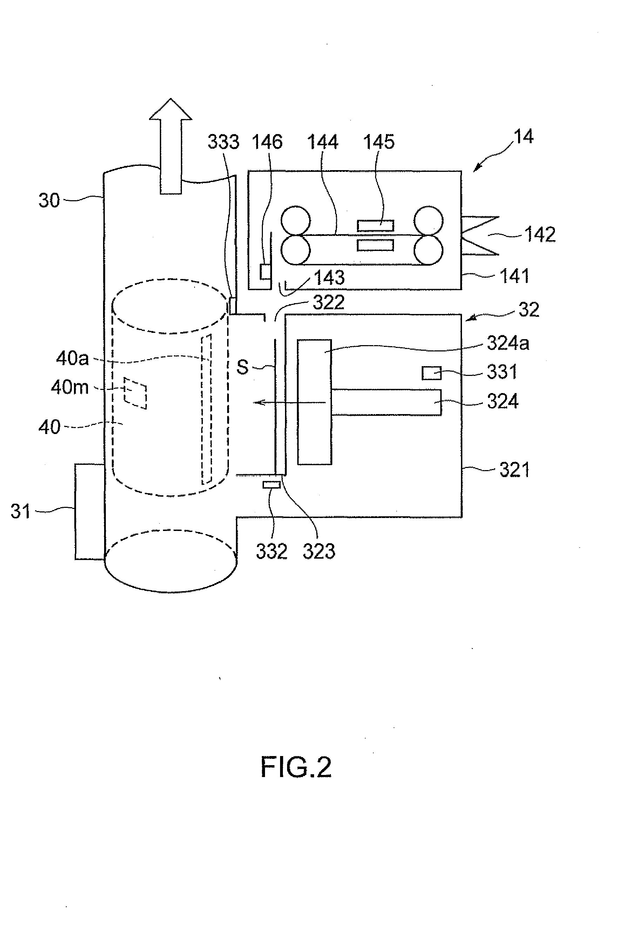

Next, the structure of the storing member 40 is described in detail. As shown in Fig. 2, the storing member 40 has a hollow cylindrical shape, for example. An elongate slit 40 extending in a longitudinal direction is formed in a side surface of the storing member 40. A length of the slit 40a is larger than a length of a banknote to be stored into the storing member 40. A banknote is put to an inside of the storing member 40 through the slit 40a. The storing member 40 shown in Fig. 2 is a mere example, and various types of members can be used as the storing member 40. In addition, as shown in Fig. 2, the storing member 40 includes a memory unit 40m formed of, e.g., an IC tag. Data can be written in and read out from the memory unit 40. The memory unit 40m can record an identification number for identifying the storing member 40 (storing-member identifier) and information of money (denomination, number and so on) stored in the storing member 40. For example, the memory unit 40m may record storing-member information which is described below.

Next, the structure of the recognition apparatus 14 and the structure of the storing unit 32 of the pneumatic tube 30 are described in detail with reference to Fig. 2.

As shown in Fig. 2, the recognition apparatus 14 includes a housing 141 having a substantially parallelepiped shape, an inlet 142, an outlet 143, a transport unit 144, a recognition unit 145 and a sensor 146.

The housing 141 of the recognition apparatus 14 is provided with the inlet 142 through which a banknote is put to an inside of the housing 141 from an outside, and the outlet 143 through which a banknote, that has been transported by the transport unit 144, is put out from the inside of the housing to the outside.

The transport unit 144 is disposed in the inside of the housing 141, and is configured to transport, one by one, a banknote that has been put to the inside of the housing 141 through the inlet 142.

The recognition unit 145 is configured to recognize a denomination and an authenticity of a banknote that has been put into the inlet 142 and transported by the transport unit 144.

The sensor 146 is formed of, e.g., a photo interrupter or a photosensor, and is configured to detect occurrence of jam (banknote jam) in the recognition apparatus 14. For example, when a banknote put out from the outlet 143 of the recognition apparatus 14 jams so that the banknote cannot be normally received by an inlet 322 of the storing unit 32, the sensor 146 can detect the banknote.

Next, the structure of the storing unit 32 of the pneumatic tube 30 is described with reference to Fig. 2. The storing unit 32 is configured to store a banknote, which has been recognized by the recognition apparatus 14, into the storing member 40 set in the pneumatic tube 30. A housing 321 of the storing unit 32 has the inlet 322. Thus, a banknote put out from the outlet 143 of the recognition apparatus 14 enters an inside of the housing 321 through the inlet 322, so as to be escrowed in an escrow unit 323.

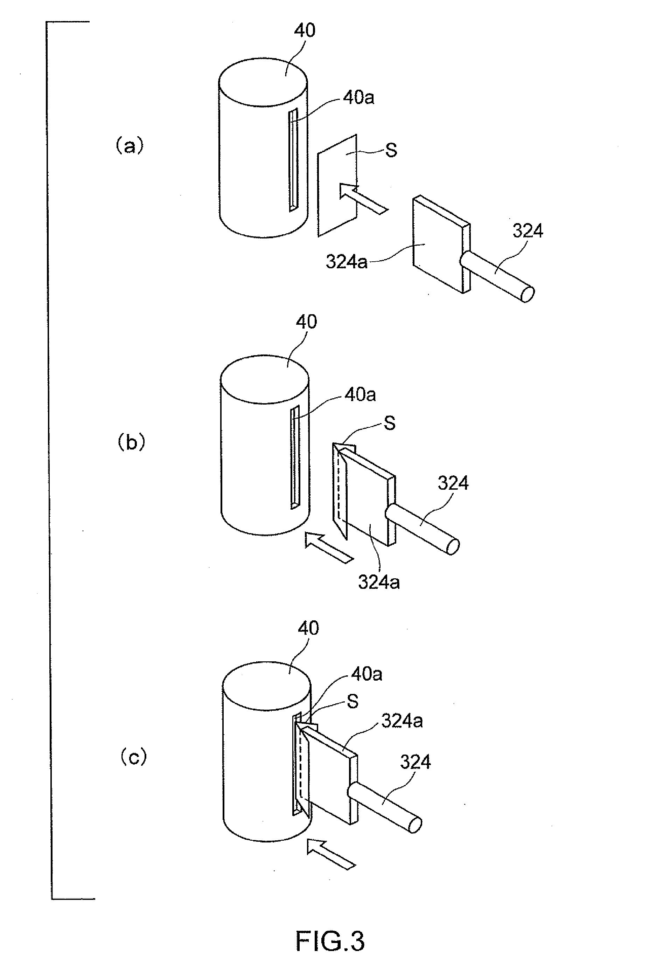

The storing unit 32 includes a storing mechanism 324. The storing mechanism 324 is configured to store a banknote escrowed in the escrow unit 323 into the storing member 40 set in the pneumatic tube 30. For example, the storing mechanism 324 has a pushing member 324a, and pushes to store a banknote S escrowed in the escrow unit 323 into the storing member 40. Details of the pushing operation are described with reference to Fig. 3.

Figs. 3(a) to 3(c) are perspective views showing the storing member 40 and the storing mechanism 324 having the pushing member 324a. In Fig. 3(a) to 3(c), operations by which the banknote is stored into the storing member 40 by the storing mechanism 324 are sequentially illustrated. In the example shown in Fig. 3, the storing member 40 having the slit 40a in its side surface is used. As shown in Fig. 3, the pushing member 324a of the storing mechanism 324 pushes the one banknote S escrowed in the escrow unit 323 toward the slit 40a of the storing member 40, so that the banknote S is stored into the storing member 40. In this manner, a banknote, which has been put into the recognition apparatus 14 and recognized by the recognition unit 145, is stored into the storing member 40 one by one.

In addition, the storing unit 32 has a sensor for detecting a status. Namely, the storing unit 32 includes a sensor 331 for detecting a position of the storing mechanism 324 and a sensor 332 for detecting whether there is a banknote in the escrow unit 323 or not. Each of the sensors 331 and 332 is formed of a photo interrupter or a photosensor.

By means of information about a position of the storing mechanism 324 detected by the sensor 331, whether the storing mechanism 324 is in the course of the pushing operation or not can be known.

With the use of information obtained from the sensor 331 and the senor 332, whether a jam occurs in the storing unit 32 or not can be known. Namely, if there is a banknote in the escrow unit 323 although the pushing operation ends, it can be judged that a jam occurs. In addition, occurrence of jam may be judged by also using information from a sensor 333 which is described below.

As shown in Fig. 2, the pneumatic tube 30 has the sensor 333 configured to detect that a banknote is stored into the storing member 40. The sensor 333 is formed of a photo interrupter or a photosensor, and is disposed between the escrow unit 323 and the slit 40a (a slit or the like provided in the air tube) of the storing member 40 set in the pneumatic tube 30.

Next, the status notifying unit 31 of the pneumatic tube 30 is described. The status notifying unit 31 is configured to grasp the status of the pneumatic tube 30 (including the storing unit 32) by means of the below-described various sensors (sensors 331 to 333 and so on), and to notify the status of the pneumatic tube 30 to the control unit 11. The status of the pneumatic tube 30 includes whether the storing member 40 is set in the pneumatic tube 30 or not, whether the pneumatic tube 30 is in the course of the storing operation or not, and whether a jam occurs in the pneumatic tube 30 or not.

In addition, the status notifying unit 31 can know the fact that a banknote is stored into the storing member 40 by information from the sensor 333. For each time when a banknote is stored into the storing member 40, the status notifying unit 31 may notify the control unit 11 of this. Thus, the control unit 11 can grasp the number of banknotes stored in the storing member 40.

The control unit 11 includes a memory unit configured to record a money-amount data of banknotes in the storing member 40. There are two timings at which the control unit 11 renews the money-amount data recorded in the memory unit.

A first timing is a timing at which the control unit 11 is notified from the status notifying unit 31 that the money put into the recognition apparatus 14 has been stored in the storing members. 40. At this timing, the control unit 11 renews the banknote money-amount data recorded in the memory unit. When money is not stored into the storing member 40 because of occurrence of jam, the money is again put into the recognition apparatus 14.

A second timing is a timing at which the control unit 11 is notified from the recognition apparatus 14 that a banknote put into the recognition apparatus 14 has been recognized by the recognition unit 145. At this timing, the control unit 11 renews the banknote money-amount data recorded in the memory unit. Whether to employ either one of the timings depends on an operation of the system. In a case where the second timing is employed, when a banknote put into the recognition apparatus 14 is a banknote that has been removed from the recognition apparatus 14 because of occurrence of jam and again put thereinto, the control unit 11 does not renew the money-amount data recorded in the memory unit, in order to avoid double count.

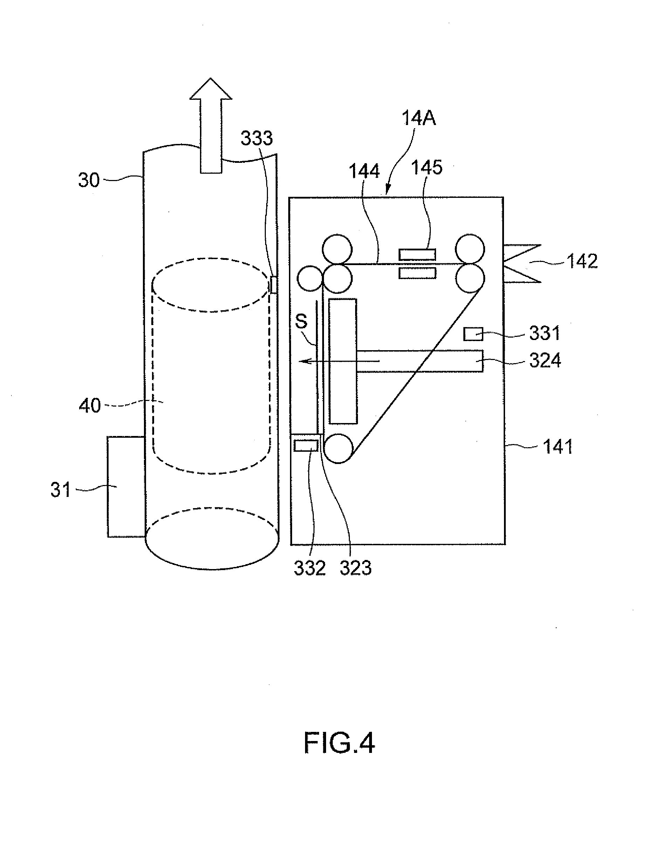

In the aforementioned example, although the storing unit for storing a banknote into the storing member 40 is included in the pneumatic tube, the storing unit may be included in the recognition apparatus. Fig. 4 shows a structure of a recognition apparatus 14A including a storing unit. In Fig. 4, the constituent elements having functions equivalent to those described with reference to Fig. 3 are shown by the same reference numbers.

As shown in Fig. 4, an end of the pneumatic tube 30 is located near to an outside surface of the housing 141 of the recognition apparatus 14A. Alternatively, the end of the pneumatic tube 30 may be attached to the outside surface of the housing 141 of the recognition apparatus 14A. In addition, as shown in Fig. 4, inside the housing 141 of the recognition apparatus 14, the storing mechanism 324 is disposed near to a downstream-side end of the transport unit 144. A banknote put into the inlet 142 of such a recognition apparatus 14A is transported by the transport unit 144 up to the escrow unit 323, and then is stored into the storing member 40 by the storing mechanism 324, as described with reference to Fig. 3.

The recognition apparatus 14A includes the storing mechanism 324 configured to store a banknote into the storing member 40 set in the pneumatic tube 30, and the recognition unit 145 configured to recognize a banknote put thereinto. The recognition apparatus 14A is configured to notify the status of the recognition apparatus 14A.

As described above, in the money handling system 1 in the embodiment of the present invention, the status notifying unit 31 is provided on the pneumatic tube 30, so that the control unit 11 can know the status of the pneumatic tube. Thus, depending on the status of the pneumatic tube, the control unit 11 can cause the POS register 12 to display a message, and can control the money change apparatus 13 and the recognition apparatus 14. The operations are described in detail below.

The control unit 11 causes the display unit of the POS register 12 to display the status of the pneumatic tube 30 and a message corresponding to the status, and controls money acceptance or not-acceptance of the recognition apparatus 14. In more detail, when the control unit 11 is notified from the status notifying unit 31 that the pneumatic tube 30 is in the course of the storing operation, the control unit 11 controls the recognition apparatus 14 such that the recognition apparatus 14 does not dispense a banknote. On the other hand, when the control unit 11 is notified that the pneumatic tube 30 is not in the course of the storing operation, the control unit 11 causes the recognition apparatus 14 to take the money-input-standby state. Thus, it is possible to prevent a jam which might be caused by a banknote that is further put into the recognition apparatus 14 during the storing operation.

When the control unit 11 is notified of an abnormal status by the status notifying unit 31, the control unit 11 does not cause the recognition apparatus 14 to take the money-input-standby state, but causes the POS register 12 to display a message to inform a clerk of the abnormal status. The abnormal status means that the money put into the recognition apparatus 14 cannot be normally stored into the storing member 40, because a jam occurs, the storing member is not set or the storing member is full.

In this manner, the control unit 11 determines whether or not the recognition apparatus 14 takes the money-input standby-state in which money can be put thereinto, based on the status of the storing unit 32 notified from the status notifying unit 31.

When the status of the pneumatic tube 30 or the status of the recognition apparatus 14 is abnormal (occurrence of jam or the like), the control unit 11 does not perform the collecting operation of the money change apparatus 13. This is because, even when money is dispensed from the money change apparatus 13, the money cannot be deposited into the recognition apparatus 14, and thus the collecting operation is withheld beforehand.

The recognition apparatuses 14 and 14A, the storing unit 32 and the storing member 40 can be configured so as to handle a paper sheet, such as a valuable instrument, or a coin, in addition to a banknote.

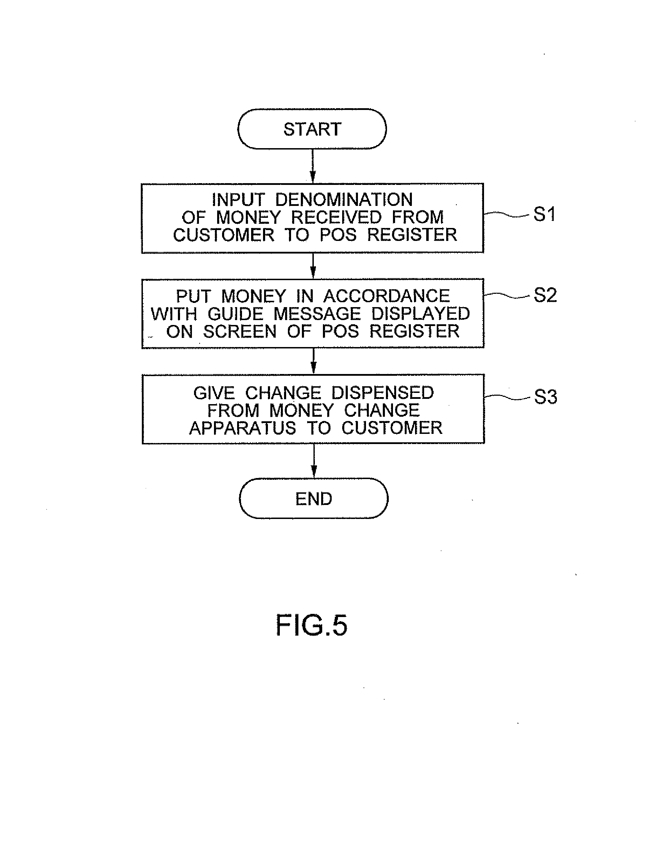

Next, with reference to a flowchart of Fig. 5, there is described an operation (cash settlement process) of a clerk, from when the clerk receives money from a customer, up to when the clerk gives back a change to the customer, in the above money handling system 1.

At first, the clerk inputs a denomination of money received from the customer to the POS register 12 (step S1). Then, the clerk puts the money in accordance with a guide message displayed on an image screen (display unit) of the POS register 12 (step S2). The guide message shows a destination of money (i.e., money change apparatus 13 or the recognition apparatus 14) for each denomination. Then, the clerk gives a change dispensed from the money change apparatus 13 to the customer (step S3). As understood from the flowchart, since it is not necessary for the clerk himself/herself to judge a destination of the money, an adequate cash settlement process can be performed regardless of clerk's experience and the like.

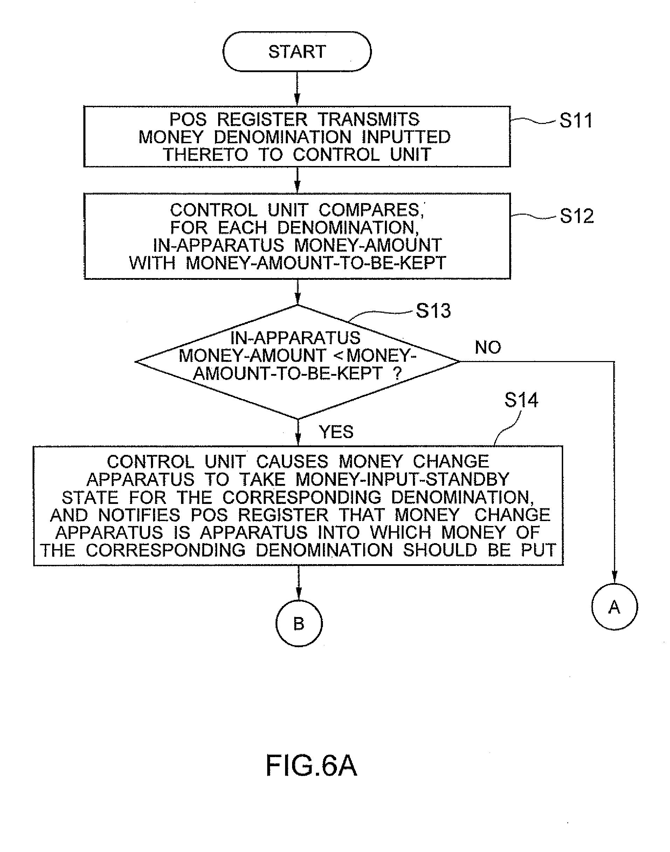

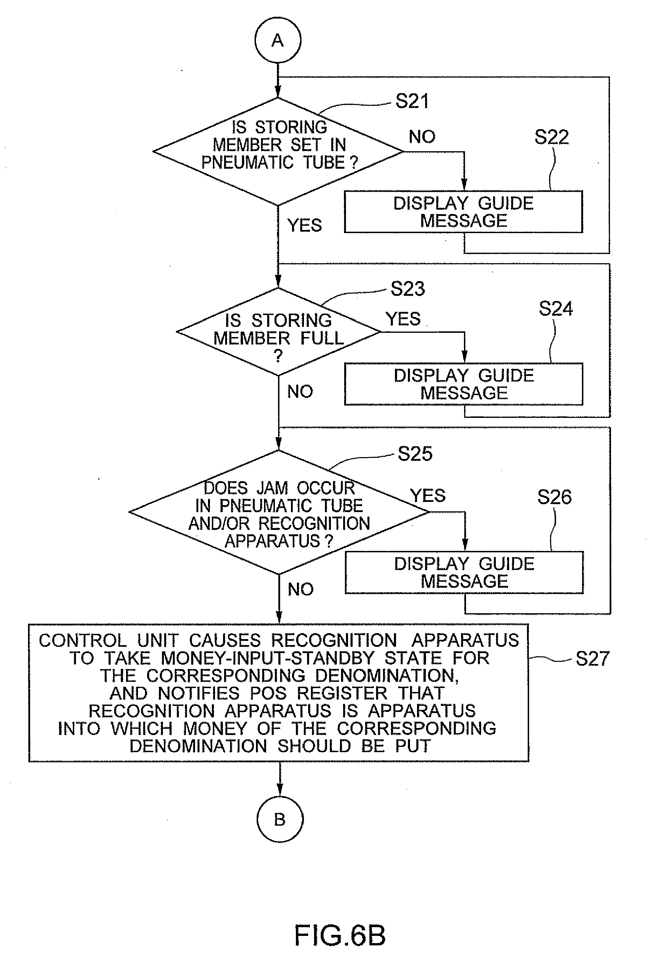

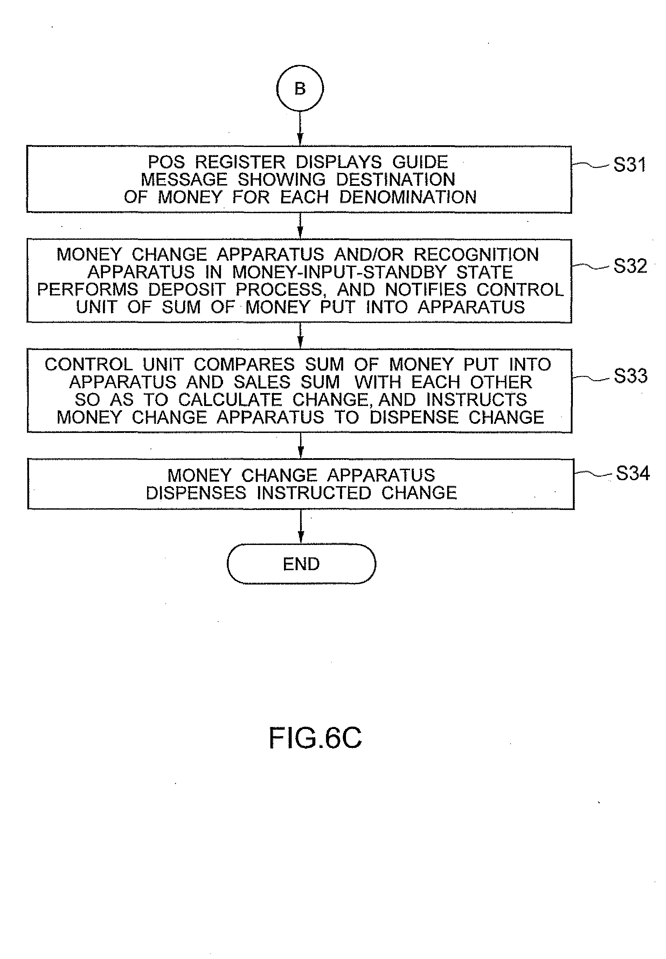

Next, with reference to flowcharts of Figs. 6A to 6C, there is described an operation of the money handling system 1 when the cash settlement process described with reference to Fig. 5 is performed.

(1) The POS register 12 transmits the denomination of the money, which has been inputted by the clerk to the input unit of the POS register 12, to the control unit (step S11). Thus, the control unit 11 can know the denomination of the money received from the customer.

(2) The control unit 11 compares, for each denomination inputted to the POS register 12, the money-amount of this denomination in the money change apparatus 13 (i.e., in-apparatus money-amount) and the money-amount-to-be kept set for this denomination with each other (step S12). As described above, the money-amount-to-be kept is previously determined for each denomination. That is, for each denomination inputted to the POS register 12, the in-apparatus money-amount and the money-amount-to-be kept are compared to each other.

(3) Based on the comparison in the step S12, when the in-apparatus money-amount is smaller than the money-amount-to-be kept, the process proceeds to a step S14 or the process proceeds to a step S21 otherwise (step S13).

(4) The control unit 11 causes the money change apparatus 13 to take the money-input-standby state for this denomination, and notifies the POS register 12 that the money change apparatus 13 is an apparatus into which money of this denomination should be put (step S14).

(5) Based on the notification from the status notifying unit 31, the control unit 11 judges whether the storing member 40 is set in the pneumatic tube 30 or not. When the storing member 40 is set, the process proceeds to a step S23, and when the storing member 40 is not set, the process proceeds to a step S22 (step S21).

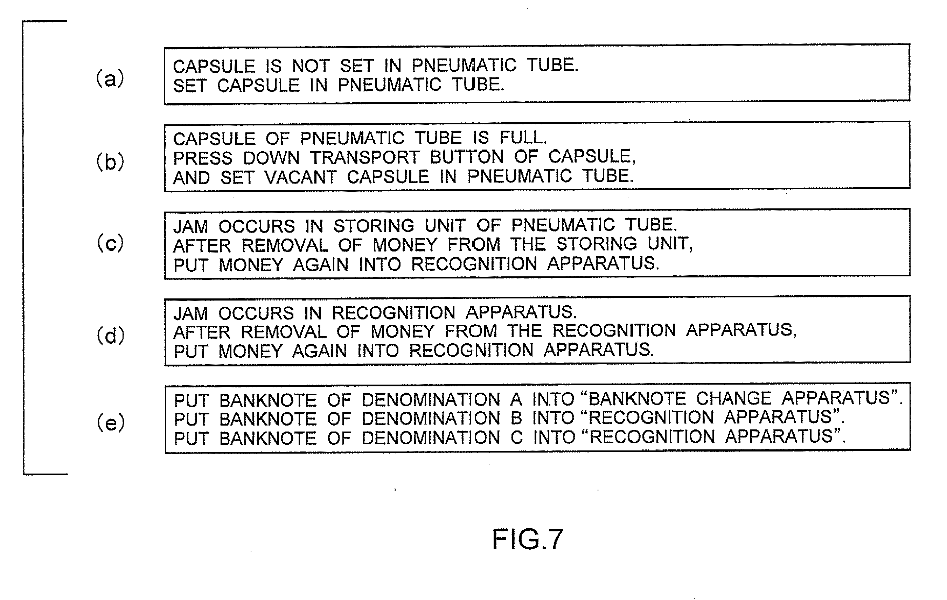

(6) The control unit 11 notifies the POS register 12 that the storing member 40 is not set in the pneumatic tube 30, and the POS register 12 displays a guide message for guiding to set the storing member (capsule) 40 in the pneumatic tube 30 (step S22). Fig. 7(a) shows an example of the guide message in this case.

(7) Based on the notification from the status notifying unit 31, the control unit 11 judges whether the storing member 40 set in the pneumatic tube 30 is full with money or not. When the storing member 40 is not full, the process proceeds to a step S25, and when the storing member 40 is full, the process proceeds to a step S24 (step S23). Herein, when money-amount of money stored in the storing member reaches the predetermined storing number (e.g., 200), it is judged that "the storing member is full". The storing value may not be fixed, and the stores 10 may have different values, respectively, for example. As described above, the number of money stored in the storing member 40 is detected by the sensor 333 disposed on the pneumatic tube 30, and is notified by the status notifying unit 31 to the control unit 11.

(8) The control unit 11 notifies the POS register 12 that the storing member 40 set in the pneumatic tube 30 is full, and the POS register 12 displays a guide message for guiding to set the vacant storing member 40 in the pneumatic tube 30 (step S24). Fig. 7(b) shows an example of the guide message in this case.

(9) Based on the notifications from the status notifying unit 31 and the recognition apparatus 14, the control unit 11 judges whether a jam occurs in the pneumatic tube 30 and the recognition apparatus 14. When a jam does not occur, the process proceeds to a step S27, and when a jam occurs, the process proceeds to a step S26 (step S25). As described above, the jam in the pneumatic tube 30 is grasped by the status notifying unit 31, and is notified to the control unit 11.

(10) The control unit 11 notifies the occurrence of jam in the pneumatic tube 30 or the recognition apparatus 14 to the POS register 12, and the POS register 12 displays a guide message for guiding to remove the money jammed in the pneumatic tube 30 or the recognition apparatus 14 (step S26). Fig. 7(c) shows an example of the guide message when a jam occurs in the storing unit 32 of the pneumatic tube 30.

(11) When no abnormal status is found in the pneumatic tube 30 and the recognition apparatus 14, the control unit 11 causes the recognition apparatus 14 to take the money-input-standby state for this denomination, and notifies the POS register 12 that the recognition apparatus 14 is an apparatus into which money of this denomination should be put (step S27). Thus, money of this denomination can be put into the recognition apparatus 14.

(12) The POS register 12 displays a guide message showing a destination of money for .each denomination (step S31). The guide message is based on the information notified from the control unit 11 to the POS register 12 in the step S14 and the step S27. Fig. 7(d) shows an example of this guide message. Since a destination of money is indicated for each denomination, it is not necessary for the clerk to judge a destination of money.

(13) The money change apparatus 13 and/or the recognition apparatus 14, which has been caused by the control unit 11 to take the money-input-standby state, performs a deposit process of money put thereinto, and notifies the control unit 11 of a sum of money put thereinto (step S32).

(14) The control unit 11 compares the sum of money put into the apparatus and a sales sum with each other, so as to calculate a change, and instructs the money change apparatus 13 to dispense the change (step S33).

(15) The money change apparatus 13 dispenses the change instructed from the control unit 11 (step S34).

In the above flow, when the in-apparatus money-amount is smaller than the money-amount-to-be kept, money of this denomination is put into the money change apparatus 13. On the other hand, when the in-apparatus money-amount is not less than the money-amount-to-be kept, money of this denomination is put into the recognition apparatus 14. Thus, the money-amount of this denomination in the money change apparatus 13 can be managed. In addition, when the statuses of the pneumatic tube 30 and the recognition apparatus 14 are normal, money can be accepted, whereby occurrence of jam or the like can be prevented.

In the above flow, by comparing the in-apparatus money-amount with the money-amount-to-be kept for each denomination, either of the apparatuses into which money of this denomination should be put is determined. However, not limited thereto, another method may be employed.

For example, when large denomination money, which is larger than a predetermined denomination (e.g., 50 euros), is included in money received from a customer, or when money of a certain denomination whose number exceeds the money-amount-to-be kept is included in money received from the customer, the aforementioned process subsequent to the step S21 may be performed, so that the clerk is leaded to put all the money received from the customer into the recognition apparatus 14. Thus, the clerk can merely put money received from a customer in a certain transaction, into either one of the money change apparatus 13 and the recognition apparatus 14. Namely, the operation of putting money into the apparatus by a clerk can be simplified. As has been described above, according to the money handling system in the embodiment of the present invention, since the control unit 11 controls the money-input-standby state of the recognition apparatus 14 based on the statuses of the pneumatic tube 30 and the recognition apparatus 14, occurrence of trouble such as a jam can be prevented. In addition, since the control unit 11 notifies the POS terminal 12 of the abnormal statuses of the pneumatic tube 30 and the recognition apparatus 14, maintainability can improved. Moreover, it is possible to prevent a secondary trouble caused by money further put into the apparatus during a jam.

Further, since the destination of money received from a customer is displayed on the display unit of the POS register 12, it is not necessary for a clerk to judge the destination of the money, whereby the system can be more easily used.

In the conventional money handling system using the air tube, since the storing member is not managed, it is impossible to confirm in which store money collected by the pneumatic tube has been put into the money handling system, and so on. Thus, the money in the money handling system cannot be strictly managed, which is disadvantageous in terms of security.

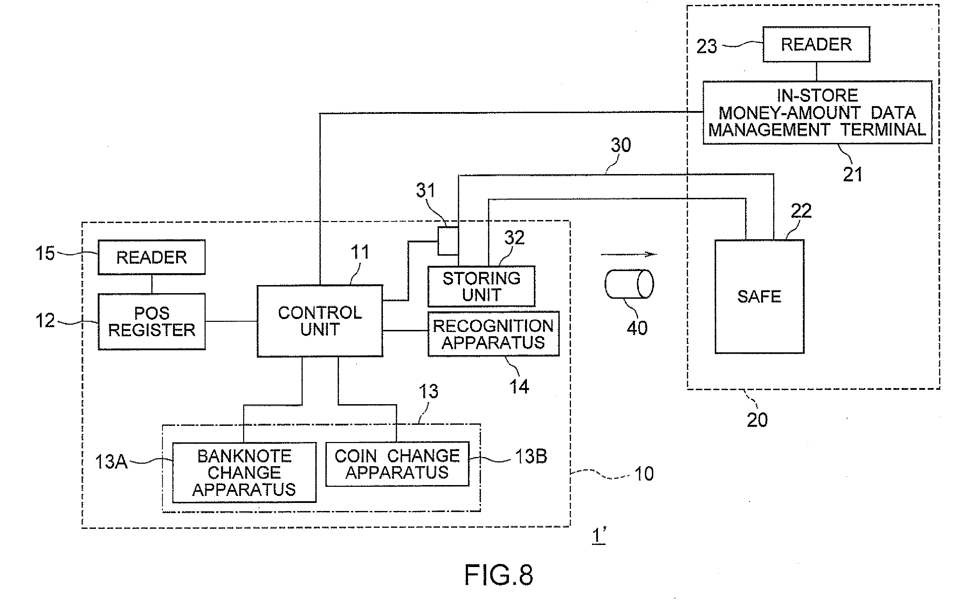

A structure of the money handling system in another embodiment for solving the above problem is described with reference to Fig. 8.

Fig. 8 is a block diagram showing a structure of the money handling system 1' in this embodiment. One of the differences between the money handling system 1' shown in Fig. 8 and the money handling system 1 shown in Fig 1 is that the money handling system 1' in this embodiment includes a reader 15 connected to the POS register 12 and a reader 23 connected to the in-store money-amount data management terminal 21.

In this embodiment, the POS register 12 notifies the control unit 11 of an identifier of the storing member 40 (storing-member identifier) read by the reader 15. The storing-member identifier identifies the storing member 40, and is uniquely assigned to each storing member. Herebelow, the storing-member identifier is also referred to as "capsule ID".

The reader 15 is an equipment that reads the storing-member identifier of the storing member 40. For example, when a memory unit 40m (described hereafter) configured to record the storing-member identifier is an IC tag, the reader 15 is an IC-tag reader. Alternatively, when the storing-member identifier is recorded in a bar code applied to the storing member 40, a bar code reader for reading the bar bode is used as the reader 15.

The reader 23 is connected to the in-store money-amount data management terminal 21 installed in the cash room 20, and is configured to read the identifier of the storing member 40 taken out from the safe 22.

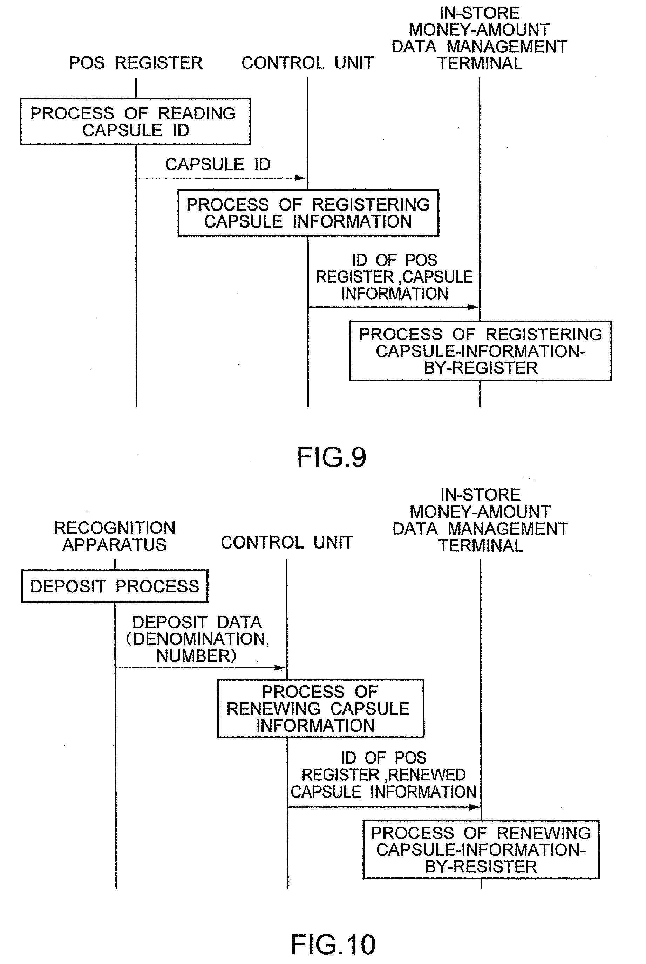

Next, an operation of the money handling system in this embodiment is described with reference to the flowcharts of Figs. 9 and 10. Fig. 9 shows an operation of the money handling system when the storing member 40 is set in the pneumatic tube 30, and Fig. 10 shows an operation of the money handling system when money is put into the recognition apparatus 14.

First, the POS register 12 performs a process of reading a capsule ID. In the reading process of the capsule ID, the POS register 12 reads the capsule ID of the storing member 40 to be set in the pneumatic tube 30, by means of the reader 15 connected to the POS register 12. Then, the POS register 12 notifies the control unit 11 of the read capsule ID. At this time, the POS register 12 may notify the control unit 11 of an identifier of the POS register 12 itself (referred to as "register ID", "ID of POS register" or "POS register ID") in addition to the capsule ID.

When the control unit 11 receives the capsule ID from the POS register 12, the control unit 11 performs a process of registering capsule information (storing-member information). In the capsule-information registering process, the control unit 11 creates anew capsule information including the capsule ID of the storing member 40. The control unit 11 records the new capsule information in the memory unit, and transmits the register ID and the created capsule information to the in-store money-amount data management terminal 21.

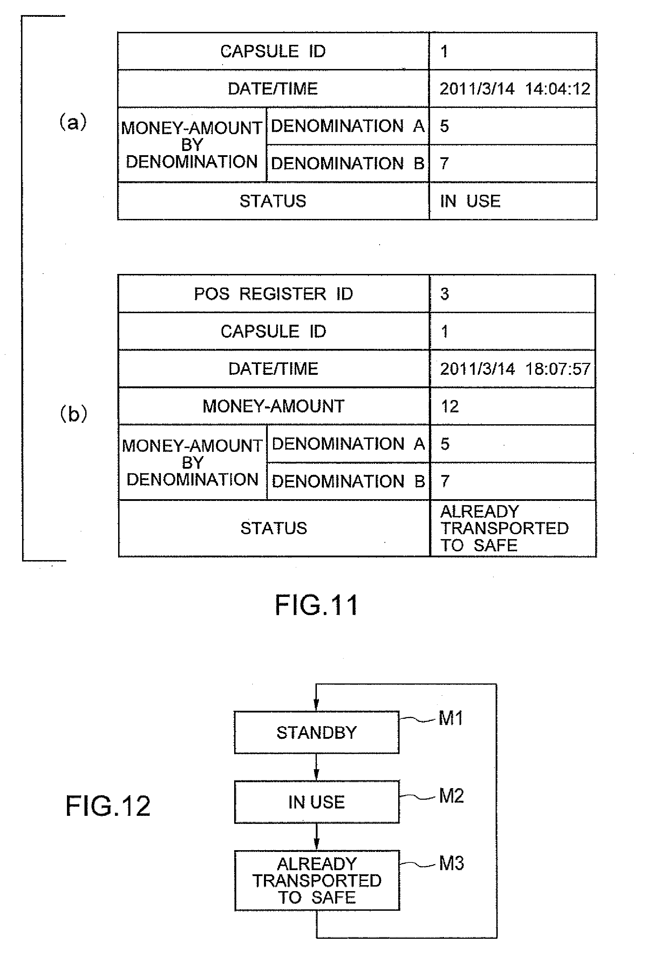

The capsule information is concretely described with reference to Fig. 11(a). Fig. 11(a) shows an example of a structure (item) of the capsule information.

As shown in Fig. 11(a), the capsule information is composed of a capsule ID, date/time, money-amount by denomination, and a status. The "capsule ID" is an identifier of the storing member 40 notified from the POS register 12.

The "date/time" of the capsule information is a time when the storing member 40 was set in the pneumatic tube 30. The date/time is notified from the status notifying unit 31 to the control unit 11. The "date/time" may be a time when the capsule ID of the storing member 40 was read, which is notified from the POS register 12.

The "money-amount by denomination" is information that is notified from the recognition apparatus 14 to the control unit 11. The "money amount by denomination" shows the number of money, which has been recognized by the recognition apparatus 14, by denomination. The "status" shows a status of the storing member 40, which is described in detail below.

The control unit 11 transmits the created capsule information together with the register ID to the in-store money-amount data management terminal 21. The register ID is an identifier of the POS register 12.

When the in-store money-amount data management terminal 21 receives the register ID and the capsule information from the control unit 11, the in-store money-amount data management terminal 21 performs a process of registering capsule-information-by-register (storing-member information by store). In the process of registering capsule-information-by-register, the in-store money-amount data management terminal 21 creates capsule-information-by-register, and records the capsule-information-by-register in a memory unit of the in-store money-amount data management terminal 21. Even when there is further capsule-information-by-register relating to the storing member, which has been already transported to the safe 22, in the memory unit of the in-store money-amount data management terminal 21, the information is not deleted. The memory unit of the in-store money-amount data management terminal 21 may be a memory unit included in the in-store money-amount data management terminal 21, or may be a memory unit of another apparatus that is connected, for communication, to the in-store money-amount data management terminal 21.

The capsule-information-by-register is concretely described with reference to Fig. 11(b), Fig. 11(b) shows an example of a structure (item) of the capsule-information-by-register.

As shown in Fig. 11(b), the capsule-information-by-register is composed of a register ID, a capsule ID, a date/time, money-amount, money-amount by denomination, and a status. The "date/time" is a time when the storing member 40 was set in the pneumatic tube 30 (or a time when the capsule ID of the storing member 40 was read in the store 10), a time when money was stored into the storing member 40, a time when the storing member 40 was transported to the safe 22, or a time when the capsule ID of the storing member 40 was read in the cash room 20. The "money-amount" is the number of money stored in the storing member 40. The other items are as described above.

As shown in Fig. 11(b), in the capsule-information-by-register, the register ID identifying the store and the capsule ID are related to each other. Thus, since the storing member and the store are associated with each other, it is possible to manage into which storing member money is put and money of which store is put thereinto, and so on, by means of the in-store money-amount data management terminal 21.

After money of the predetermined number has been stored in the storing member, the storing member is transported to the safe of the cash room, and another storing member is set in the pneumatic tube of the store. In accordance with the same process flow as described above, capsule information about the thus set storing member is created by the control unit 11, and capsule-information-by-register is created by the in-store money-amount data management terminal 21.

The control unit 11 may be configured to record only the latest capsule information. In this case, when the control unit 11 receives a new capsule ID from the POS register 12, the control unit 11 deletes the previous capsule information, and then performs a registration process of the new capsule information. In addition, it is possible to display capsule information recorded in the control unit 11 on the display unit of the POS register connected to the control unit 11, by a clerk who gives such a command to the input unit of the POS register 12.

Next, an operation of the money handling system when money is put into the recognition apparatus 14 is described with reference to Fig. 10.

First, when the money in a certain transaction is put into the inlet 142 of the recognition apparatus 14, the recognition apparatus 14 performs a deposit process. In the deposit process, the recognition apparatus 14 recognizes the money put thereinto by means of the recognition unit 145, and notifies the control unit 11 of deposit data (denomination and the number of recognized money).

When control unit 11 receives the deposit data from the recognition apparatus14, the control unit 11 renews capsule information recorded in the memory unit of the control unit 11. To be specific, the contents of the "money-amount by denomination" in the capsule information shown in Fig. 11(a) are renewed. For example, when the deposit data shows that five money of denomination A and seven money of denomination B have been deposited, the control unit 11 adds the money-amount of denomination A in the capsule information by five, and money-amount of denomination B in the capsule information by seven. The renewal of the capsule information may be performed by additionally using information from the status notifying unit 31 of the pneumatic tube 30. Namely, in addition to the deposit data from the recognition apparatus 14, information obtained from, e.g., the sensor 333 may be used. Thus, money stored in the storing member 40 can be more reliably grasped, and the data can be reflected on the capsule information.

Then, the control unit 11 transmits the renewed capsule information together with the register ID to the in-store money-amount data management terminal 21.

When the in-store money-amount data management terminal 21 receives the register ID and the renewed capsule information from the control unit 11, the in-store money-amount data management terminal 21 performs a process of renewing the capsule-information-by-register. In the renewal process of the capsule-information-by-register, the in-store money-amount data management terminal 21 renews the contents of the capsule-information-by-register corresponding to the notified register ID and the capsule ID. Specifically, the "money-amount" and the "money-amount by denomination" in the capsule-information-by-register shown in Fig. 11(b) are renewed.

The renewal of the capsule information and the capsule-information-by-register is performed other than when money is put into the recognition apparatus 14. For example, when the status of the storing member 40 changes, there are performed, similarly to the above, renewal of the capsule information by the control unit 11, notification of the capsule information to the in-store money-amount data management terminal 21 by the control unit 11, and renewal of the capsule-information-by-register by the in-store money-amount data management terminal 21.

Next, the status, which is one of the items in the capsule-information-by-register, is described in detail with reference to Fig. 12. Fig. 12 shows three possible status of the storing member 40 shown in Fig. 8 and transition of the statuses. "Standby" (state M1) is a state before the storing member 40 is set in the pneumatic tube 30 (or before the capsule ID is read by the reader 15). "In use" (state M2) is a state where the storing member 40 is set in the pneumatic tube 30. "Already transported to safe" (state M3) is a state where the storing member 40 has been transported to the safe 22 of the cash room by the pneumatic tube 30.

When the control unit 11 is notified from the status notifying unit 31 that the storing member 40 has been set in the pneumatic tube 30, the control unit 11 changes the status of the capsule information from "standby" to "in use". In addition, when the control unit 11 is notified from the status notifying unit 31 that the storing member 40 set in the pneumatic tube 30 has been transported to the safe 22 by the pneumatic tube 30, the control unit 11 changes the status of the capsule information from "in use" to "already transported to safe". As described above, when the status of the capsule information is changed, renewed capsule information is transmitted to the in-store money-amount data management terminal 21, and the capsule-information-by-register is renewed. After the storing member 40 has been transported to the safe 22 of the cash room 20, the capsule information recorded in the control unit 11 is not renewed after that. Thereafter, the data are managed by the in-store money-amount data management terminal 21 as capsule-information-by-register.

When the capsule ID of the storing member 40 taken out from the safe 22 has been read by the reader 23 of the cash room 20, the in-store money-amount data management terminal 21 changes the status of the capsule-information-by-register from "already transported to safe" to "standby".

As understood from above, by recording and renewing the capsule-information-by-register, the in-store money-amount data management terminal 21 can manage the money-amount data, the status and so on of the storing member 40 in each store 10. In addition, similarly to the conventional process, money-amount data of the money in the money change apparatus 13 in the store 10 can be managed by the in-store money-amount data management terminal 21. Thus, the in-store money-amount data management terminal 21 can strictly manage money-amount data of the money in the money handling system 1'.

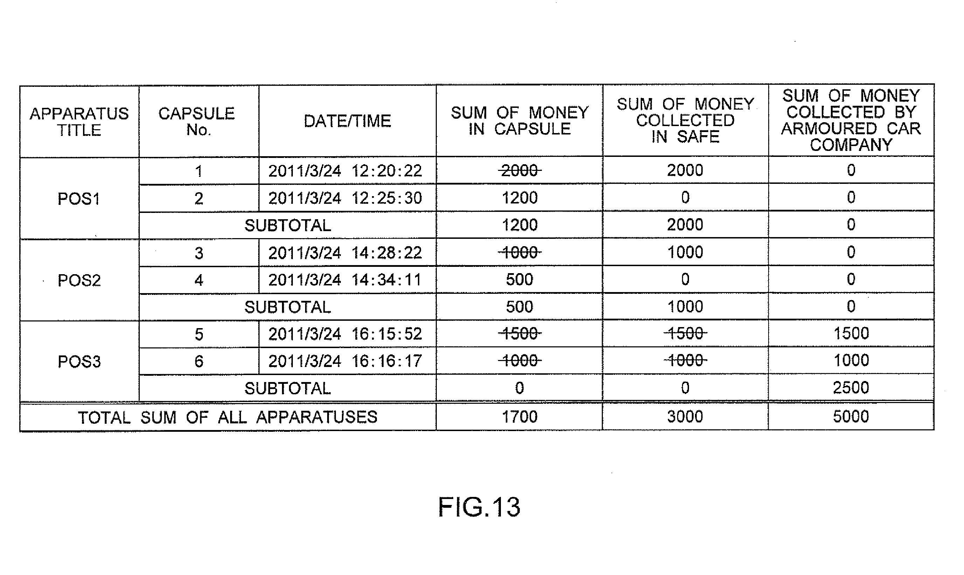

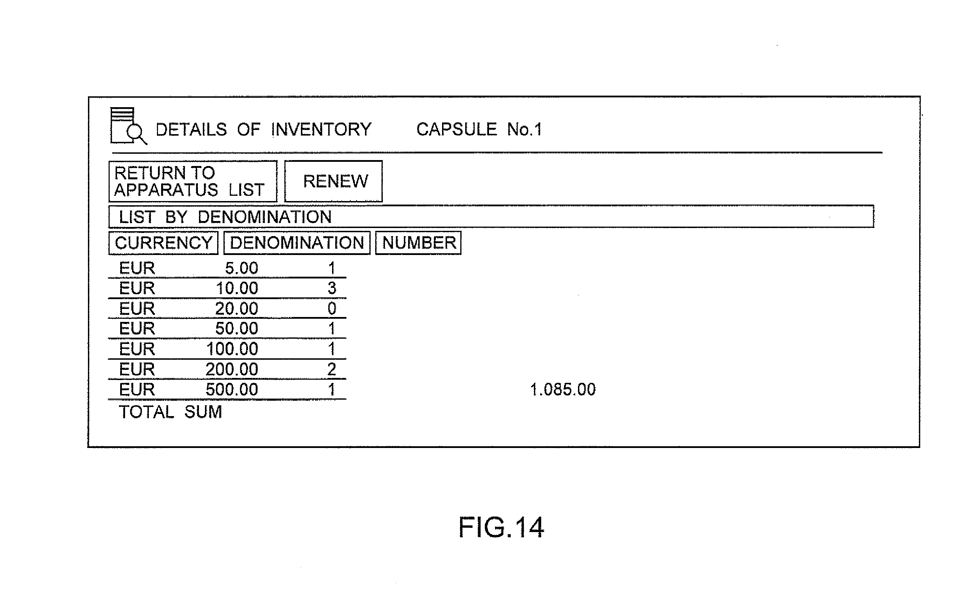

Next, a management image of the storing member 40 by the in-store money-amount data management terminal 21 is described in detail with reference to Figs. 13 and 14. Fig. 13 is an example of a capsule management image screen displayed on the in-store money-amount data management terminal 21.

In a column of "apparatus titie", titles of POS registers (POS1, POS2, POS3) are displayed. The title corresponds to the register ID transmitted from the control unit 11, and is used to identify the store.

In a column of "capsule No.", numbers corresponding to the storing-member identifiers of the storing members 40 are displayed. In a column of "date/time", dates and times when the status of the storing member 40 was changed are displayed.

In a column of "sum of money stored in capsule", sums of money stored in the storing members 40 are displayed. Each sum is calculated by using money-amount by denomination of the capsule-information-by-register.

In a column of "sum of money collected in safe", sums of money stored in the storing member 40 transported into the safe 22 of the cash room 20 are displayed. Each sum is equal to a sum of money stored in the storing member 40 immediately before the storing member 40 is transported to the safe 20. When the in-store money-amount data management terminal 21 is notified from the control unit 11 that the status of the storing member 40 is changed from "in use" to "already transported to safe", the in-store money-amount data management terminal 21 overscores the sum of money displayed on a cell of "some of money stored in capsule", and displays the sum on a cell of "sum of money collected in safe".

In a column of "sum of money collected by armoured car company", sums of the money in the storing member 40, which has been taken out from the safe 22 to an armoured car company (CIT: Cash In Transit), are displayed. When the status of the storing member 40 is changed from "already transported to safe" to "standby", the in-store money-amount data management terminal 21 overscores the sum of money displayed on a cell of "sum of money collected in safe" of the storing member 40, and displays the sum on a cell of the "sum of money collected by armoured car company".

In addition, as shown in Fig. 13, in addition to subtotals by store of the "sum of money stored in capsule", the "sum of money collected in safe" and the "sum of money collected by armoured car company", total sums of money of all the stores are displayed.

The in-store money-amount data management terminal 21 can refer to money-amount data by denomination of money stored in the storing member 40. Fig. 14 is an example of an image screen of money-amount data by denomination displayed on the in-store money-amount data management terminal 21. This image screen is displayed by clicking the capsule number of the "capsule No." column in the image screen shown in Fig. 13. Fig. 14 shows money-amount data by denomination of the storing member 40 entitled as the capsule number 1.

By referring to the image screens of Figs. 13 and 14, an operator of the in-store money-amount data management terminal 21 can exactly grasp a location and an amount of money stored in the storing member 40. Thus, according to the money handling system in this embodiment, the status of the storing member and the money-amount data of the money in the storing member can be strictly managed. As a result, the money in the money handling system can be strictly managed, to thereby improve security.

In addition, since the money-amount of the money in the storing member 40 is grasped by means of the in-store money-amount data management terminal 21, when the storing member 40 is delivered to an armored car company to which deposit of money to a bank is entrusted, it is not necessary to count the money in the storing member 40, which promotes the efficiency in operation in the cash room 20.

After the capsule ID of the storing member 40 taken out from the safe 22 of the cash room 20 has been read, the storing member 40 is transported to an armoured car company. After the storing member 40 has been transported to the armoured car company, the money in the storing member 40 is taken out therefrom by a staff of the armoured car company, and a sum of the collected money is counted. At this time, in order that the sum of the collected money can be compared to management information of the in-store money-amount data management terminal 21, the in-store money-amount data management terminal 21 can output an invoice to the armoured car company from an output unit (not shown) such as a printer or the like.

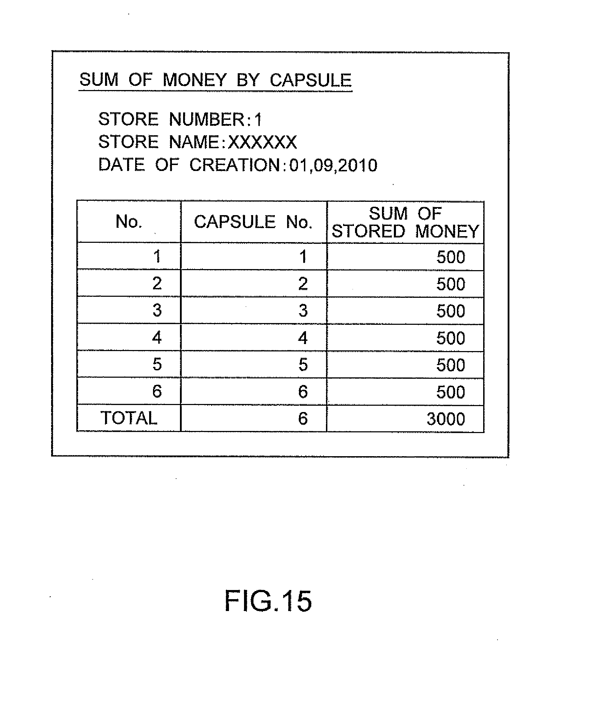

Fig. 15 shows an example of the invoice to the armoured car company. In this example, a store number, a store name, a date of creation, and a sum of money in each storing member are described. By referring to the invoice, the armoured car company can compare the sum of money stored in the collected storing member and the sum of money managed by the in-store money-amount data management terminal 21 with each other.

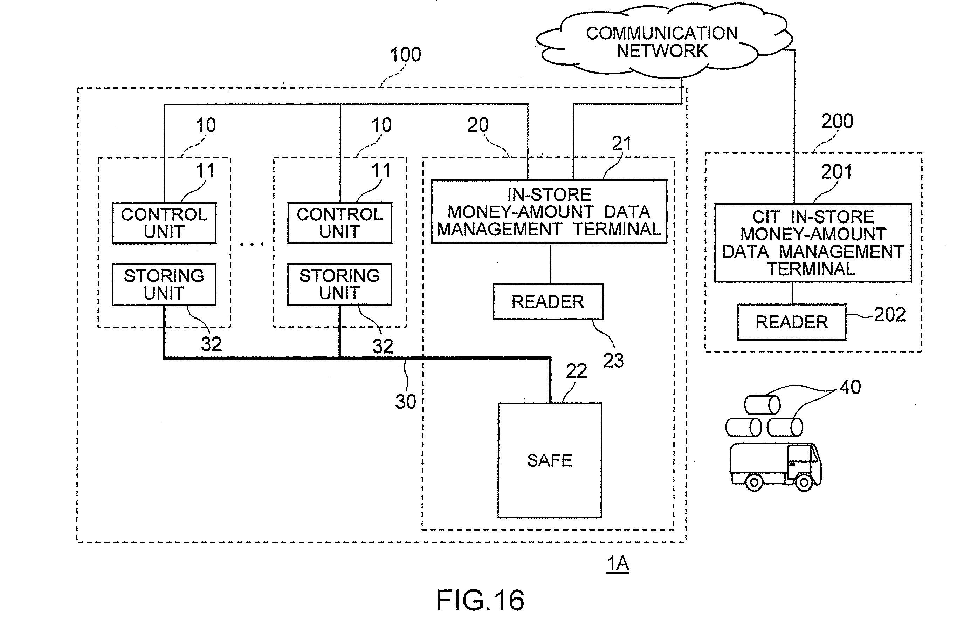

Next, a money handling system 1A in a modification is described with reference to Fig. 16. In the money handling system 1A in this modification, an in-store money-amount data management terminal is also installed in an armoured car company.

Fig. 16 is a block diagram showing a structure of the money handling system 1A. The money handling system 1A includes a supermarket 100 having the structure described with reference to Fig. 8 and an armoured car company 200. In Fig. 16, the constituent elements having the same functions as those described with reference to Fig. 8 are shown by the same reference numbers.

In the armoured car company 200, there are installed a CIT in-store money-amount data management terminal 201 and a reader 202 for reading the storing-member identifier of the storing member 40 transported to the armoured car company.

The in-store money-amount data management terminal 21 installed in the cash room 20 of the supermarket 100 and the CIT in-store money-amount data management terminal 201 installed in the armoured car company 200 are connected to each other through a communication network such as an internet. The in-store money-amount data management terminal 21 is configured to transmit information about money-amount of each storing member 40 collected in the safe 22, to the CIT in-store money-amount data management terminal 201. Thus, the CIT in-store money-amount data management terminal 201 can display a location (store 10 or cash room 20) of each storing member 40 in the super market 100 and money-amount of money stored therein. Therefore, the armoured car company can grasp a collection condition in a user (in this case, in the supermarket). Accordingly, the armoured car company can efficiently perform the collecting operation. As a result, the user reduce a cost for transporting to the armoured car company. Further, even without such an invoice that is described with reference to Fig. 15, the armoured car company can compare money-amount of the money in the storing member 40 and managed money-amount with each other.

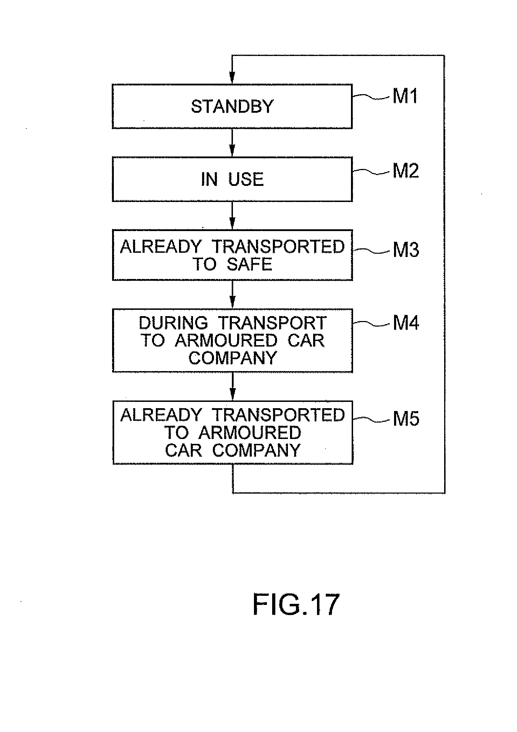

Next, a status of the storing member 40 in the money handling system 1A is described with reference to Fig. 17. Fig. 17 shows possible five statuses of the storing member 40 in the system shown in Fig. 16, and transition of the statues. Since the states M1 to M3 have been already described with reference to Fig. 12, description thereof is omitted.

"During transport to armoured car company" (state M4) is a state where the storing member 40 is in the course of being transported to the armoured car company. "Already transported to armoured car company" (state M5) is a state where the storing member 40 has been transported to the armoured car company.

When the capsule ID of the storing member 40 taken out from the safe 22 is read by the reader 23 of the cash room 20, the in-store money-amount data management terminal 21 changes the status of the capsule-information-by-register from "already transported to safe" to "during transport to armoured car company".

In addition, when the capsule ID of the storing member 40 having been transported to the armoured car company is read by the reader 202 of the armoured car company 200, the in-store money-amount data management terminal 21 receives the information from the CIT in-store money-amount data management terminal 201, and changes the status of the capsule-information-by-register from "during transport to armoured car company" to "already transported to armoured car company". The change of status of the capsule-information-by-register may be performed by the CIT in-store money-amount data management terminal 201.

The storing member 40 transported to the armoured car company is opened, and the money stored therein is collected. Thereafter, the vacant storing member 40 is assigned with a new capsule number by the armoured car company, and is returned to the supermarket 100.

In a case where a new capsule ID is assigned to the storing member 40 to be returned, the status of the storing member 40 changes as follows. Namely, when the capsule ID of the storing member 40 returned to the user is read by the reader 15 of the store 10, the control unit 11 changes the status of the capsule information from "already transported to armoured car company" to "standby". Then, the in-store money-amount data management terminal 21 changes the status of the capsule-information-by-register from "already transported to armoured car company" to "standby".

The embodiments of the present invention have been described in the above. In the above description, the reader 15 is connected to the POS register 12. However, not limited thereto, the reader 15 may be connected to, e.g., the control unit 11.

In addition, in the above description, the register ID is an identifier of the POS register 12. However, not limited thereto, as long as the store can be identified, any identifier (store identifier) will do. For example, a serial number of the apparatus, such as the control unit 11, installed in the store 10 can be used.

In addition, the pneumatic tube 30 may include a writing unit that writes predetermined information in the memory unit 40m of the storing member 40 set in this pneumatic tube 30. The writing unit can be configured to wire capsule-information-by-register in the memory unit 40m. In a manner similar to notification of information to the in-store money-amount data management terminal 21, the control unit 11 transmits the register ID and the capsule information to the pneumatic tube 30. Based on this information, the writing unit of the pneumatic tube 30 writes the capsule-information-by-register in the memory unit 40m of the storing member 40. Thus, even without an in-store money-amount data management terminal, the capsule-information-by-register can be read.

In addition, the pneumatic tube 30 may include a reading unit that reads the capsule ID of the storing member 40 set in this pneumatic tube 30. The pneumatic tube 30 transmits the capsule ID read by the reading unit to the control unit 11. When the capsule ID read by the pneumatic tube 30 corresponds to the capsule ID read by the reader 15, the control unit 11 transmits storing-member information to the in-store money-amount data management terminal 21. If the capsule ID read by the pneumatic tube 30 and the capsule ID read by the reader 15 do not correspond to each other, the control unit 11 does not transmit the storing-member information to the in-store money-amount data management terminal 21, but causes the display unit of the POS register 12 to display the fact that the the capsule ID read by the pneumatic tube 30 and the capsule ID read by the reader 15 do not correspond to each other. Thus, when the storing member 40, which is different from the storing member 40 whose capsule ID has been read by the reader 15, is set in the pneumatic tube 30, it can be prevented that the management information and the actual information do not correspond to each other.

Although those skilled in the art can consider additional effects and various modifications of the present invention based on the above description, the aspect of the present invention is not limited to the aforementioned embodiment. It is possible to variously add, delete, modify or partially delete the present invention, within a scope of the claims and a conceptual idea derived from an equivalent thereof, without departing from the theme of the present invention.

## Claims

1. A money handling system comprising:
a display unit;
a pneumatic tube configured to transport a storing member;
a status notifying unit configured to notify a status of the pneumatic tube; and
a control unit configured to cause the display unit to display the status of the pneumatic tube notified from the status notifying unit.

2. The money handling system according to claim 1, wherein
when the status of the pneumatic tube shows that the storing member is not set in the pneumatic tube, the control unit is configured to cause the display unit to display a message for guiding to set the storing member in the pneumatic tube.

3. The money handling system according to claim 1 or 2, wherein
when the status of the pneumatic tube shows that the number of money stored in the storing member set in the pneumatic tube reaches the predetermined number, the control unit is configured to cause the display unit to display a message for guiding to set another storing member in the pneumatic tube.

4. The money handling system according to any one of claims 1 to 3, further comprising:
a storing unit configured to store money into the storing member set in the pneumatic tube; and
a recognition apparatus including a recognition unit configured to recognize money put thereinto, the recognition apparatus being configured to put out the money that has been recognized by the recognition unit to the storing unit, and configured to notify a status of the recognition apparatus;
wherein the control unit is configured to determine whether or not the recognition apparatus takes a money-input-standby state in which money can be put thereinto, based on the status of the recognition apparatus notified from the recognition apparatus.

5. The money handling system according to claim 4, wherein
the control unit is configured to cause the display unit to display the status of the recognition apparatus notified from the recognition apparatus.

6. The money handling system according to claim 4 or 5, wherein
when the status of the recognition apparatus shows that a money jam occurs in the recognition apparatus, the control unit is configured to cause the display unit to display a message for guiding to remove the jammed money from the recognition apparatus and to put the removed money again into the recognition apparatus.

7. The money handling system according to any one of claims 4 to 6, wherein
the status notifying unit is configured to notify a status of the storing unit; and
the control unit is configured to determine whether or not the recognition apparatus takes a money-input-standby state in which money can be put thereinto, based on the status of the storing unit notified from the status notifying unit.

8. The money handling system according to any one of claims 4 to 6, wherein
the status notifying unit is configured to notify a status of the storing unit; and
the control unit is configured to cause the display unit to display the status of the storing unit notified from the status notifying unit.

9. The money handling system according to claim 7 or 8, wherein
when the status of the storing unit shows that a money jam occurs in the storing unit, the control unit is configured to cause the display unit to display a message for guiding to remove the jammed money from the storing unit and to put the removed money again into the recognition apparatus.

10. The money handling system according to any one of claims 1 to 3, further comprising
a recognition apparatus including a storing unit configured to store money into the storing member set in the pneumatic tube and a recognition unit configured to recognize money put thereinto, the recognition apparatus being configured to notify a status of the recognition apparatus,
wherein the control unit is configured to determine whether or not the recognition apparatus takes a money-input-standby state in which money can be put thereinto, based on the status of the recognition apparatus notified from the recognition apparatus.

11. The money handling system according to claim 10, wherein
the control unit is configured to cause the display unit to display the status of the recognition apparatus notified from the recognition apparatus.

12. The money handling system according to claim 10 or 11, wherein
when the status of the recognition unit shows that a money jam occurs in the recognition apparatus, the control unit is configured to cause the display unit to display a message for guiding to remove the jammed money from the recognition apparatus and to put the removed money again into the recognition apparatus.

13. The money handling system according to any one of claims 4 to 12, wherein
the control unit includes a memory unit configured to record money-amount data of the money in the storing member, and
the control unit is configured to renew the money-amount data recorded in the memory unit, when the control unit is notified from the status notifying unit that the money put into the recognition apparatus has been stored in the storing member.

14. The money handling system according to any one of claims 4 to 12, wherein
the control unit includes a memory unit configured to record money-amount data of the money in the storing member, and
the control unit is configured to renew the money-amount data recorded in the memory unit, when the control unit is notified from the recognition apparatus that the money put into the recognition apparatus has been recognized by the recognition unit.

15. The money handling system according to claim 14, wherein
when the money put into the recognition apparatus is the money that has been removed from the recognition apparatus because of occurrence of a money jam, the control unit is configured not to renew the money-amount data recorded in the memory unit.

16. The money handling system according to any one of claims 1 to 15, wherein
the display unit is provided on a POS register.

17. A money handling system comprising:
a POS register;
a pneumatic tube configured to transport a storing member;
a status notifying unit configured to notify a status of the pneumatic tube;
a recognition apparatus configured to recognize money to be stored in the storing member, and configured to notify a status of the recognition apparatus;
a money change apparatus configured to recognize money put thereinto and store the recognized money, and configured to put out a change from the stored money; and
a control unit configured to compare, for each denomination inputted to the POS register, an in-apparatus money-amount of each denomination in the money change apparatus, with a money-amount-to-be-kept of the corresponding denomination, the money-amount-to-be-kept being a storage limit of each denomination, the control unit further configured to cause the money change apparatus to take a money-input-standby state in which money of the corresponding denomination can be put thereinto, when the in-apparatus money-amount is smaller than the money-amount-to-be kept.

18. The money handling system according to claim 17, wherein, when the in-apparatus money-amount is not less than the money-amount-to-be kept, the control unit is configured to cause the recognition apparatus to take the money-input-standby state in which money of the corresponding denomination can be put thereinto, if the status of the pneumatic tube notified from the status notifying unit and the status of the recognition apparatus notified from the recognition apparatus are normal.

19. The money handling system according to claim 18, wherein
when the status of the pneumatic tube or the status of the recognition apparatus is abnormal, the control unit is configured to cause the POS register to display the status.

20. The money handling system according to claim 18 or 19, wherein
the POS register is configured to display a guide message showing a destination of money for each denomination.

21. The money handling system according to any one of claims 17 to 20, wherein
the control unit is configured not to perform a collecting operation of the money change apparatus, when the status of the pneumatic tube or the status of the recognition apparatus is abnormal.

22. A money handling method comprising:
transmitting a money denomination inputted to a POS register to a control unit;
comparing, for each denomination inputted to the POS register, an in-apparatus money-amount of each denomination in a money change apparatus, with a money-amount-to-be-kept of the corresponding denomination, the money-amount-to-be-kept being a storage limit of each denomination, and
causing the money change apparatus to take a money-input-standby state in which money of the corresponding denomination can be put thereinto, when the in-apparatus money-amount is smaller than the money-amount-to-be kept, or causing a recognition apparatus to take the money-input-standby state in which money of the corresponding denomination can be put thereinto, when the in-apparatus money-amount is not less than the money-amount-to-be kept.

23. The money handling method according to claim 22, further comprising:
when a status of a pneumatic tube configured to transport a storing member and/or a status of a recognition apparatus configured to recognize money to be stored in the storing member are/is abnormal, causing the POS register to display the status(es).
